# FASCICULE DE BREVET EUROPEEN

(11) **EP 2 049 913 B1**
(45) Date de publication et mention de la délivrance du brevet: **14.03.2012**
(21) Numéro de dépôt: 07787303.2
(22) Date de dépôt: 10.07.2007
(51) Int. Cl.: G01S 19/14, G01S 19/24, G01S 19/25

(54) **RECEPTEUR DE NAVIGATION SPATIAL À FONCTIONNEMENT ASSISTE PAR DES INFORMATIONS DE NAVIGATION**
MIT HILFE VON NAVIGATIONSINFORMATIONEN ARBEITENDER RAUMNAVIGATIONSEMPFÄNGER
SPACE NAVIGATION RECEIVER OPERATING WITH THE ASSISTANCE OF NAVIGATION INFORMATION

(30) Priorité: 31.07.2006 FR 0653224
(43) Date de publication de la demande: 22.04.2009
(73) Titulaire: Alcatel Lucent, 75007 Paris (FR)
(72) Inventeur: WILHEM, Nicolas, 31170 TOURNEFEUILLE (FR); MONNERAT, Michel, 31240 L'Union (FR); FAVARO, Henri, 31570 Lanta (FR)
(74) Mandataire: Nicolle, Olivier
(86) Numéro de dépôt international: PCT/EP2007/057028
(87) Numéro de publication internationale: WO 2008/015080

(56) Documents cités:
- WO-A-02/059639
- OA-A- 9 803
- US-A1- 2002 084 933
- US-A1- 2003 072 356
- STEPHANE LANNELONGUE, PEDRO PABLOS.: "Fast Acquisition Techniques For G.P.S. Receivers" INSTITUTE OF NAVIGATION - AM 98, 1998, - 1998 pages 261-269, XP002420150

## Description

L'invention concerne les récepteurs de navigation qui sont utilisés dans des applications spatiales et qui sont alimentés en signaux radio de navigation par des systèmes de navigation par satellites de type RNSS (pour « Radio Navigation Satellite System ») et/ou GNSS (pour « Global Navigation Satellite System »).

On entend ici par « système de navigation par satellites » tout système dédié à la navigation et comportant : i) une constellation de satellites (de navigation) placés en orbite autour d'un astre (par exemple la Terre) et chargés de diffuser à destination de récepteurs de navigation des signaux de navigation radiofréquence (RF) représentatifs de messages de navigation destinés à leur permettre de déterminer leur position (il pourra s'agir, par exemple, de l'un des systèmes existants (GPS, GLONASS) ou de l'un des futurs systèmes (GALILEO, COMPASS), ou encore de l'un de leurs équivalents ou dérivés), ou ii) un ensemble d'émetteurs radio fixes au sol chargés d'émettre des signaux de type navigation vers le zénith afin qu'ils puissent être captés par les équipements (ou récepteurs) de navigation embarqués dans des engins spatiaux (tels que des satellites) à positionner.

Comme le sait l'homme de l'art, les récepteurs de navigation qui sont utilisés dans les applications spatiales sont issus de ceux qui sont utilisés dans les applications aéronautiques. De ce fait, ils présentent une architecture reposant sur :
- un module de traitement radiofréquence (RF) chargé de transformer en signaux numériques des signaux radiofréquences de navigation transmis par un système de navigation par satellites,
- un module de traitement numérique chargé de produire des mesures brutes à partir des signaux numériques de navigation (notamment des mesures de pseudo-distance, de Doppler intégré, de phase de porteuse et de rapport C/No), et
- un module de localisation (ou « navigateur orbital ») chargé de déterminer, généralement au moyen d'un filtre de Kalman orbital, des points de localisation pour l'engin (ou véhicule) spatial dans lequel il est embarqué, définis par une position, une vitesse, un temps récepteur (ou local) et la dérive de l'horloge bord, à partir des mesures brutes et des données de navigation démodulées par le module de traitement numérique (initialement contenues dans les signaux numériques de navigation sous une forme modulée), ainsi que de modèles orbitaux de forces.

La détermination des mesures brutes et des données de navigation démodulées par le module de traitement numérique se fait classiquement en deux phases. Une première phase dite d'acquisition consiste à effectuer une recherche temps/fréquence en estimant l'énergie des signaux reçus (numérisés) à l'intérieur d'une tranche temporelle Doppler pour chaque position de code du signal CDMA. Une deuxième phase dite de poursuite débute une fois l'acquisition effectuée, c'est-à-dire une fois que l'on est « accroché » aux signaux de navigation. Elle consiste à poursuivre, d'une part, les codes contenus dans les signaux reçus (numérisés) au moyen d'une boucle à verrouillage de retard (ou DLL (pour « Delay Locked Loop »)), et d'autre part, la porteuse des signaux reçus (numérisés) au moyen d'une boucle de Costas du troisième ordre modifiée (par exemple), afin de délivrer périodiquement les mesures brutes et les données de navigation démodulées, typiquement toutes les secondes, en vue de leur utilisation par le module de localisation.

Le document OA 9803A décrit un récepteur GPS comprenant des moyens de traitement à boucle ouverte, adapté pour estimer des pseudodistances.

L'invention a pour but de proposer un récepteur de navigation spatial dont la consommation d'énergie et/ou la masse est/sont réduit(s).

Elle propose à cet effet un récepteur de navigation du type de celui présenté dans la partie d'introduction, mais dans lequel :
- le module de traitement radiofréquence est également agencé de manière à transformer en signaux numériques auxiliaires des signaux radio auxiliaires reçus, qui sont représentatifs d'informations de navigation relatives au système, et
- le module de traitement numérique ne fait qu'acquérir périodiquement, par sous-échantillonnage du signal reçu, les signaux numériques de navigation (sans les poursuivre), puis traite les échantillons de signal acquis (et donc enregistrés), le traitement se faisant en mode temps réel ou différé, pour déduire de ces échantillons, des signaux numériques auxiliaires et de points de localisation les mesures brutes de navigation qui sont ensuite transmises (de façon sous-échantillonnée) au module de localisation (par exemple un filtre de Kalman) afin qu'il produise les points de localisation correspondants.

Le récepteur de navigation selon l'invention peut comporter d'autres caractéristiques qui peuvent être prises séparément ou en combinaison, et notamment :
- il peut être agencé de manière à recevoir les signaux radio auxiliaires utiles au traitement des signaux de navigation sur un canal de communication radio dédié à la télémesure/télécommande (ou « TM/TC ») ;
- les informations de navigation, qui sont représentées par les signaux radio auxiliaires, sont par exemple les éphémérides des satellites du système de navigation par satellites ;
- son module de traitement numérique peut être chargé, lors de chaque période d'acquisition, i) de transformer en un ensemble d'échantillons les signaux numériques de navigation qui sont délivrés par le module de traitement radiofréquence pendant une durée choisie, puis ii) de stocker cet ensemble d'échantillons, puis iii) de différencie les différents signaux numériques de navigation représentés par les échantillons de l'ensemble stocké et de déduire les mesures brutes de ces signaux numériques de navigation différenciés, des signaux numériques auxiliaires et des points de localisation ;
   ➢ la durée choisie peut par exemple être comprise entre environ 10 millisecondes et environ 40 millisecondes, et plus préférentiellement comprise entre 10 millisecondes et 20 millisecondes ;
- la période d'acquisition peut par exemple être supérieure ou égale à 20 secondes, et de préférence au moins égale à 30 secondes ;
- le module de localisation peut être chargé de déterminer périodiquement des points de localisation, selon une période de durée inférieure à la période d'acquisition des signaux numériques de navigation ;
   ➢ la période de détermination peut par exemple être égale à environ une seconde.

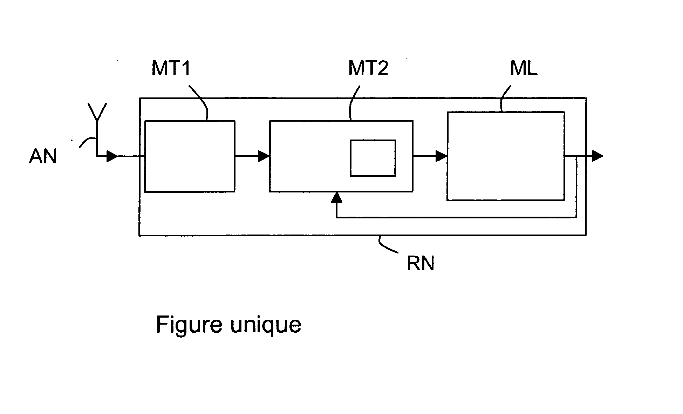

D'autres caractéristiques et avantages de l'invention apparaîtront à l'examen de la description détaillée ci-après, et du dessin annexé, sur lequel l'unique figure illustre de façon très schématique un exemple de réalisation d'un récepteur de navigation spatial selon l'invention. Le dessin annexé pourra non seulement servir à compléter l'invention, mais aussi contribuer à sa définition, le cas échéant.

L'invention a pour objet de permettre la réduction de la consommation d'énergie et/ou de la masse d'un récepteur de navigation spatial destiné à être embarqué sur un engin (ou véhicule) spatial.

Dans ce qui suit, on considère à titre d'exemple non limitatif que le récepteur (de navigation spatial) RN est embarqué sur un satellite d'observation, de télécommunication, en orbite géostationnaire ou défilante, volant éventuellement en formation. Mais, l'invention n'est pas limitée à ce type d'engin (ou véhicule) spatial. Elle concerne en effet tout type d'engin spatial se trouvant sur tout type de trajectoire (par exemple en orbite autour d'un corps, comme par exemple la Terre, ou sur une trajectoire interplanétaire), et notamment les sondes interplanétaires et les véhicules spatiaux habités ou non (navette, fusée et analogues).

Par ailleurs, on considère dans ce qui suit, à titre d'exemple non limitatif, que le récepteur RN est destiné à fournir des points de localisation pour l'engin spatial dans lequel il est embarqué, à partir de messages de signalisation d'un système de navigation par satellites (GNSS et/ou RNSS), comme par exemple le système GALILEO. Mais, l'invention n'est pas limitée à ce type de système de navigation par satellites. Elle concerne en effet tout système dédié à la navigation et comportant soit une constellation de satellites (de navigation) placés en orbite autour d'un astre (par exemple la Terre) et chargés de diffuser à destination de récepteurs de navigation RN des signaux de navigation radiofréquence (RF) représentatifs de messages de navigation destinés à leur permettre d'effectuer des points de localisation, soit un ensemble d'émetteurs radio fixes au sol chargés d'émettre des signaux de type navigation vers le zénith afin qu'ils puissent être captés par les récepteurs de navigation RN et utilisés pour effectuer des points de localisation. Il pourra donc également s'agir, par exemple, de l'un des systèmes existants (GPS, GLONASS) ou de l'un des futurs systèmes (COMPASS), ou encore de l'un de leurs équivalents ou dérivés.

Comme cela est illustré fonctionnellement sur l'unique figure, un récepteur (de navigation spatial) RN selon l'invention comprend au moins une antenne AN, un module de traitement radiofréquence (RF) MT1, un module de traitement numérique MT2 et un module de localisation ML.

La (ou les) antenne(s) AN est (sont) agencée(s) de manière à recevoir des signaux radiofréquences et notamment ceux qui représentent des messages (de navigation et d'intégrité) relatifs au système (de navigation par satellites), ici GALILEO.

Le module de traitement RF MT1 est alimenté en signaux RF par la (ou les) antenne(s) AN. Il est classiquement constitué d'au moins un convertisseur chargé de pré-amplifier avec un faible bruit les signaux RF reçus par une antenne AN, puis de filtrer ces signaux (analogiques) pré-amplifiés, puis de convertir la fréquence radio des signaux (analogiques) pré-amplifiés et filtrés en une fréquence intermédiaire, puis de convertir en signaux numériques les signaux (analogiques) pré-amplifiés, filtrés et présentant la fréquence intermédiaire.

Selon l'invention, le récepteur RN est le destinataire de deux types de messages relatifs au système de navigation (par satellites), ici GNSS ou RNSS.

Le premier type comprend les messages de navigation qui sont diffusés sous forme de signaux radio par les satellites du système de navigation et/ou par des équipements de diffusion associés à ce dernier. On entend ici par « message de navigation » un message comportant des informations de navigation relatives à la position orbitale et/ou la synchronisation (décalage d'horloge interne par rapport à l'horloge de référence du système) d'un satellite de navigation.

Le second type comprend les messages d'informations de navigation relatives au système de navigation qui sont diffusés sous forme de signaux radio dits auxiliaires par des équipements de diffusion, appartenant par exemple à un système dit « d'augmentation » ou « d'assistance » associé au système de navigation, et/ou par les satellites de ce dernier. On entend ici par « informations de navigation » au moins les éphémérides des satellites du système de navigation.

Les signaux radio auxiliaires sont utiles au traitement des signaux de navigation et sont par exemple transmis sur un canal de communication radio, connu de l'homme de l'art sous l'acronyme TM/TC, lequel est dédié aux télémesures effectuées par l'engin spatial et à la télécommande de ce dernier.

Le module de traitement RF MT1 est donc agencé de manière à transformer, d'une part, les signaux radio de navigation en signaux numériques de navigation, et d'autre part, les signaux radio auxiliaires (qui représentent les messages d'informations de navigation) en signaux numériques auxiliaires.

Le module de traitement numérique MT2 est alimenté en signaux numériques de navigation et signaux numériques auxiliaires par le module de traitement RF MT1. Il est tout d'abord chargé d'acquérir périodiquement, par sous-échantillonnage du signal reçu, les signaux numériques de navigation. Cette acquisition consiste à effectuer une recherche temps/fréquence en estimant l'énergie des signaux de navigation numérisés à l'intérieur d'une tranche temporelle Doppler pour chaque position de code du signal CDMA.

De préférence, le module de traitement numérique MT2 est activé périodiquement de manière à effectuer une acquisition très courte pendant chaque période dite d'acquisition. Cette dernière est par exemple supérieure ou égale à 20 secondes, et de préférence au moins égale à 30 secondes. Par exemple on peut la prendre égale à 30 secondes ou 90 secondes, voire plus.

Par exemple, lors de chaque période d'acquisition le module de traitement numérique MT2 commence par transformer en un ensemble d'échantillons les signaux numériques de navigation qui sont délivrés par le module de traitement RF MT1 pendant une durée choisie. Cette dernière est par exemple comprise entre environ 10 millisecondes et environ 40 millisecondes, mais elle peut être supérieure aux valeurs comprises dans cet intervalle (elle peut notamment dépasser 100 ms).

Le module de traitement numérique MT2 stocke dans une mémoire MY les échantillons de l'ensemble qui est associé à la période d'acquisition en cours, afin, préférentiellement, de les traiter ensuite et non à la volée (car il n'est pas fortement contraint temporellement du fait de la durée importante (période d'acquisition) qui existe entre deux traitements successifs d'ensembles d'échantillons successifs. Ce traitement consiste à différencier les différents signaux numériques de navigation qui sont représentés par les échantillons d'un ensemble, stockés dans la mémoire MY. Cette différenciation permet de réaliser les mesures (notamment de distance et doppler) sur les signaux de navigation qui sont représentés par les signaux numériques.

Une fois que le module de traitement numérique MT2 a différencié les différents signaux numériques de navigation, qui sont représentés par un ensemble d'échantillons, il déduit de ces derniers, des signaux numériques auxiliaires et du ou des points de localisation précédemment déterminés par le module de localisation ML (et sur lesquels on reviendra plus loin), des mesures brutes. La production des mesures brutes se fait par traitement des signaux échantillonnés stockés en mémoire. Le traitement des échantillons se fait en boucle ouverte, en mode acquisition sans mise en oeuvre de boucles de poursuite ni de code ni de phase.

On entend ici par « mesures brutes » tout type de mesure classiquement utile à un module de localisation ML pour déterminer des points de localisation. Par conséquent, il s'agit notamment de mesures de pseudo-distance (représentatives de la distance séparant l'engin spatial du satellite du système de navigation par satellites qui a émis le signal de navigation reçu), de mesures Doppler intégrées, de mesures de la phase de la porteuse du signal de navigation (représenté par les données de navigation démodulées) et de mesures de rapport C/No (rapport de la puissance du signal reçu sur la puissance du bruit reçu).

Le temps nécessaire au module de traitement numérique MT2 pour déterminer les mesures brutes, en traitant un ensemble d'échantillons stocké, est fonction de la puissance de calcul disponible au sein du (micro)processeur utilisé ; typiquement cette opération peut être réalisée en traitement « batch » (i.e. en tache de fond moins prioritaire utilisant la puissance de calcul résiduelle du (micro)processeur). Par conséquent, le module de traitement numérique MT2 n'a besoin d'être activé que pendant une toute petite fraction de chaque période d'acquisition en vue de procéder à l'enregistrement d'un ensemble d'échantillons puis au traitement de ce dernier.

Il est important de noter que le module de traitement numérique MT2 peut faire l'objet de deux activations successives lors de chaque période d'acquisition, la première (très courte) pour l'enregistrement des échantillons de données (typiquement 20 ms à 100 ms), la seconde (plus longue) pour le traitement des échantillons (éventuellement en batch) et la production des mesures brutes (typiquement plusieurs secondes et dans tous les cas strictement inférieure à la période d'acquisition).

Le module de localisation ML (généralement appelé « navigateur orbital ») est chargé de déterminer des points de localisation, pour l'engin spatial dans lequel il est embarqué, à partir des mesures brutes sous-échantillonnées (les dernières et les précédentes) et des données de navigation démodulées délivrées par le module de traitement numérique MT2. On entend ici par « point de localisation » un point classiquement défini par une position (P), une vitesse (V), un temps récepteur ou local (T) et la dérive de l'horloge bord. Cette détermination des points de localisation se fait en mode d'extrapolation du filtre de Kalman, typiquement périodiquement à raison d'un point toutes les secondes.

Le module de localisation ML est par exemple du même type que celui qui équipe le récepteur de navigation TOPSTAR 3000 de la Société ALCATEL. Un tel module de localisation ML comprend par exemple un filtre de Kalman orbital effectuant une propagation de vecteur d'état au moyen d'un modèle orbital de forces approprié et des mesures de navigation disponibles. Le vecteur d'état est composé de six paramètres orbitaux, de la valeur de la dérive de l'horloge locale et du biais d'horloge local. Dans une application au voisinage de la Terre, le modèle de propagation du vecteur d'état est par exemple basé sur un modèle de champ gravitationnel terrestre 40x40, les effets gravitationnels conjugués de la lune et du soleil et les effets de la pression solaire.

Comme indiqué ci-dessus, du fait d'un fonctionnement en mode d'extraction du filtre de Kalman, le module de localisation ML délivre périodiquement un point de localisation. Cette période est de préférence beaucoup plus petite que la période d'acquisition présentée ci-avant. Typiquement (mais non limitativement), elle est choisie égale à une seconde.

Cette différence importante des durées des périodes résulte de la constatation suivante. En raison de la dynamique favorable dont bénéficie un engin spatial pendant sa mission spatiale, le module de localisation ML n'a besoin effectivement de mesures brutes relatives aux distances (pseudodistances) que toutes les N secondes afin de déterminer et délivrer toutes les M secondes des points de localisation qui correspondent à la précision de trajectoire requise pour la mission considérée. On a donc M << N ; les valeurs respectives de M et N dépendant de la précision de la mission (par exemple M = 1 s, et N = 30 s ou 90 s ou encore 150 s). De ce fait, le module de traitement numérique MT2 n'a plus besoin d'effectuer une phase de poursuite consécutivement à chaque phase d'acquisition et le traitement des données obtenues lors de chaque acquisition n'a plus besoin de se faire à la volée.

Le module de traitement numérique MT2 et le module de localisation ML du récepteur de navigation spatial RN selon l'invention sont préférentiellement réalisés sous la forme de modules logiciels (ou informatiques). Mais, ils pourraient également être réalisés sous la forme de circuits électroniques ou d'une combinaison de circuits et de logiciels.

On notera qu'en raison de l'architecture simplifiée du récepteur de navigation RN, qui ne nécessite plus obligatoirement de moyens de traitement de signal complexes, par exemple de type ASIC, le module de traitement numérique MT2 et/ou le module de localisation ML peu(ven)t désormais faire partie de moyens de calcul (processeur) d'un équipement embarqué de l'engin spatial, comme par exemple les moyens de calcul d'un capteur spatial ou du module de contrôle d'orbite et d'attitude (ou AOCS pour « Attitude and Orbit Control System »). Par conséquent, les modules constituant le récepteur de navigation spatial ne sont pas forcément tous regroupés au sein d'un unique équipement embarqué, comme c'est le cas dans l'exemple illustré sur l'unique figure.

Par ailleurs, grâce à l'invention il est possible de regrouper plusieurs fonctions de navigation en partageant des ressources mémoire et processeur communes. Ainsi, on peut par exemple constituer un équipement assurant à la fois les fonctions de suiveur d'étoile (ou « star tracker ») et de positionnement par satellites (ou GPS), ou bien à la fois les fonctions de capteur inertiel et de positionnement par satellites (ou GPS).

L'invention ne se limite pas aux modes de réalisation de récepteur de navigation spatial décrits ci-avant, seulement à titre d'exemple, mais elle englobe toutes les variantes que pourra envisager l'homme de l'art dans le cadre des revendications ci-après.

## Revendications

1. Récepteur de navigation spatial (RN), comprenant
i) un module de traitement radiofréquence (MT1) agencé pour transformer en signaux numériques de navigation des signaux radio de navigation transmis par un système de navigation par satellites,
ii) un module de traitement numérique (MT2) agencé pour acquérir lesdits signaux numériques et pour produire des mesures brutes à partir desdits signaux numériques de navigation ainsi acquis , et
iii) un module de localisation (ML) agencé pour déterminer des points de localisation à partir desdites mesures brutes,
**caractérisé en ce que**
ledit module de traitement radiofréquence (MT1) est également agencé pour transformer en signaux numériques dits auxiliaires des signaux radio auxiliaires représentatifs d'informations de navigation relatives audit système,
et **en ce que**
le module de traitement numérique (MT2) est activé périodiquement de manière à effectuer une acquisition desdits signaux numériques de navigation, cette acquisition consistant à effectuer une recherche temps/fréquence en estimant l'énergie des signaux de navigation numérisés à l'intérieur d'une tranche temporelle Doppler pour chaque position du code signal,
le module de traitement numérique (MT2) étant en outre agencé pour traiter les échantillons de signal acquis de manière à déduire lesdites mesures brutes de ces échantillons, desdits signaux numériques auxiliaires et des points de localisation précédemment déterminés, et
**en ce que**
le module de localisation (ML) est agencé pour déterminer des points de localisation en outre à partir des données de navigation démodulées initialement contenues dans lesdits signaux numériques de navigation sous une forme modulée, et de modèles orbitaux de forces.

2. Récepteur selon la revendication 1, **caractérisé en ce qu'**il est agencé pour recevoir lesdits signaux radio auxiliaires utiles au traitement des signaux de navigation sur un canal de communication radio dédié à la télémesure/télécommande (TM/TC).

3. Récepteur selon l'une des revendications 1 et 2, **caractérisé en ce que** lesdites informations de navigation, représentées par les signaux radio auxiliaires, sont des éphémérides des satellites dudit système de navigation par satellites.

4. Récepteur seton l'une des revendications 1 à 3, **caractérisé en ce que** ledit moduté de traitement numérique (MT2) est agencé, lors de chaque période d'acquisition, i) pour transformer en un ensemble d'échantillons lesdits signaux numénques de navigation qui sont délivrés par ledit module de traitement radiofréquénce (MT1) pendant une durée choisie, puis ii) pour stocker ledit ensemble d'echantillons, puis iii) pour differéncier les différents signaux numériques de navigation représentés par les échantillons de l''ensemble stocké et déduire lesdites mesures brutes de ces signaux numériques de navigation difféirenciés; desdits signaux numériques auxiliaires et desdits points de locatisation.

5. Récepteur selon la revendication 4, **caractérisé en ce que** ladite durée choisie est comprise entre environ 10 millisecondes et environ 40 millisecondes.

6. Récepteur selon la revendication 5, **caractérisé en ce que** ladite durée choisie est comprise entre 10 millisecondes et 20 millisecondes.

7. Récepteur selon l'une des revéndications 1 à 6, **caractérisé en ce que** ladite période d'acquisition est supérieure ou égale à 20 secondes.

8. Récepteur selon la revendication 7, **caractérisé en ce que** ladite période d'acquisition est au moins égale à 30 secondes

9. Récepteur selon l'une des revendications 1 à 8, **caractérisé en ce que** ledit module de localisation (ML) est agencé pour déterminer periodiquement des points de localisation, selon une période de durée inférieure à la période d'acquisition desdits signaux numériques de navigation.

10. Récepteur selon la revendication 9, **caractérisé en ce que** ladite période de détermination est égale à environ une seconde.

## Claims

1. A space navigation receiver (RN), comprising
i) a radio frequency processing module (MT1) configured to convert radio navigation signals transmitted by a satellite navigation system into digital navigation signals,
ii) a digital processing module (MT2) configured to acquire said digital signals and to produce raw measurements from said digital navigation signals thereby acquired, and
iii) a location module (ML) configured to determine location points from said raw measurements,
**characterized in that**
said radio frequency processing module (MT1) is also configured to convert auxiliary radio signals representative of navigation information related to said system into so-called auxiliary digital signals, and **in that** the digital processing module (MT2) is periodically activated so as to carry out an acquisition of said digital navigation signals, this acquisition consisting of carrying out a time/frequency search by estimating the energy of the navigation signals digitized within a Doppler time slot
for each position of the signal code,
the digital processing module (MT2) also being configured to process the acquired signal samples so as to deduce said raw measurements of those samples, from said auxiliary digital signals and from the previously determined location points, and
**in that**
the location module (ML) is configured to additionally determine location points from the initially demodulated navigation data contained within said digital navigation signals in a modulated form, and from orbital force models.

2. A receiver according to claim 1, **characterized in that** it is configured to receive said auxiliary radio signals that are useful for processing the navigation signals on a radio communication channel dedicated to telemetry/remote control (TM/TC).

3. A receiver according to one of the claims 1 and 2, **characterized in that** said navigation information, represented by the auxiliary radio signals, are the ephemerides of the satellites of said satellite navigation system.

4. A receiver according to one of the claims 1 to 3, **characterized in that** said digital processing module (MT2) is configured, during each acquisition period, to i) convert said digital navigation signals detected by said radiofrequency processing module (MT1) during a selected period of time into a set of samples, then to ii) save said set of samples, then to iii) distinguish the various digital navigation signals represented by the samples of the stored set and deduce said raw measurements from those distinguished navigation signals, from said auxiliary digital signals, and from said location points.

5. A receiver according to claim 4, **characterized in that** said selected period of time is between about 10 milliseconds and about 40 milliseconds.

6. A receiver according to claim 5, **characterized in that** said selected period of time is between 10 milliseconds and 20 milliseconds.

7. A receiver according to one of the claims 1 to 6, **characterized in that** said acquisition period is greater than or equal to 20 seconds.

8. A receiver according to claim 7, **characterized in that** said acquisition period is at least equal to 30 seconds.

9. A receiver according to one of the claims 1 to 8, **characterized in that** said location module (ML) is configured to periodically determine location points, at an interval less than the acquisition period of said digital navigation signals.

10. A receiver according to claim 9, **characterized in that** said determination period is equal to about one second.

## Patentansprüche

1. Raumnavigationsempfänger (RN), umfassend:
i) Ein Funkfrequenzverarbeitungsmodul (MT1), dazu eingerichtet, von einem Satellitennavigationssystem übertragene Navigationsfunksignale in digitale Navigationssignale umzuwandeln,
ii) ein digitales Verarbeitungsmodul (MT2), dazu eingerichtet, die besagten digitalen Signale zu erfassen und ausgehend von den besagten derart erfassten digitalen Navigationssignale Rohmessungen zu erzeugen, und
iii) ein Ortungsmodul (ML), dazu eingerichtet, ausgehend von den besagten Rohmessungen Ortungspunkte zu ermitteln,
**dadurch gekennzeichnet, dass**
das besagte Funkfrequenzverarbeitungsmodul (MT1) ebenfalls dazu eingerichtet ist, Hilfsfunksignale, welche für das besagte System betreffende Navigationsinformationen repräsentativ sind, in sogenannte digitale Hilfssignale umzuwandeln,
und dass
das digitale Verarbeitungsmodul (MT2) periodisch aktiviert wird, um die Erfassung der besagten digitalen Navigationssignale vorzunehmen, wobei diese Erfassung darin besteht, eine Zeit-Frequenz-Suche durchzuführen, indem die Energie der digitalisierten Navigationssignale innerhalb eines Doppler-Zeitschlitzes für jede Signalcode-Position geschätzt wird,
wobei das digitale Verarbeitungsmodul (MT2) weiterhin dazu eingerichtet ist, die erfassten Signalabtastwerte zu verarbeiten, um aus diesen Abtastwerten, den besagten digitalen Hilfssignalen und den zuvor ermittelten Ortungspunkten die besagten Rohmessungen abzuleiten, und
dass
das Ortungsmodul (ML) dazu eingerichtet ist, weiterhin Ortungspunkte ausgehend von den ursprünglich in den besagten digitalen Navigationssignalen in einer modulierten Form enthaltenen demodulierten Navigationsdaten und von Orbital-Kräftemodellen zu ermitteln.

2. Empfänger nach Anspruch 1, **dadurch gekennzeichnet, dass** er dazu eingerichtet ist, die besagten Hilfsfunksignale, welche für die Verarbeitung der Navigationssignale nützlich sind, auf einem für die Fernmessung/Fernsteuerung (TM/TC) bestimmten Funkkommunikationskanal zu empfangen.

3. Empfänger nach einem der Ansprüche 1 und 2, **dadurch gekennzeichnet, dass** die besagten durch die Hilfsfunksignale dargestellten Navigationsinformationen Ephemeriden der Satelliten des besagten Satellitennavigationssystem sind.

4. Empfänger nach einem der Ansprüche 1 bis 3, **dadurch gekennzeichnet, dass** das besagte digitale Verarbeitungsmodul (MT2) dazu eingerichtet ist, während jeder Erfassungsperiode i) die besagten digitalen Navigationsdaten, die während einer gewählten Zeitdauer von dem besagten Funkfrequenzverarbeitungsmodul (MT1) geliefert werden, in eine Menge von Abtastwerten umzuwandeln, anschließend ii) die besagte Menge von Abtastwerten zu speichern, und anschließend iii) die verschiedenen durch die Abtastwerte der gespeicherten Menge dargestellten verschiedenen Navigationssignale zu differenzieren und aus diesen differenzierten digitalen Navigationssignalen, den besagten digitalen Hilfssignalen und den besagten Ortungspunkten die besagten Rohmessungen abzuleiten.

5. Empfänger nach Anspruch 4, **dadurch gekennzeichnet, dass** die besagte gewählte Zeitdauer zwischen ca. 10 Millisekunden und ca. 40 Millisekunden beträgt.

6. Empfänger nach Anspruch 5, **dadurch gekennzeichnet, dass** die besagte gewählte Zeitdauer zwischen 10 Millisekunden und 20 Millisekunden beträgt.

7. Empfänger nach einem der Ansprüche 1 bis 6, **dadurch gekennzeichnet, dass** die besagte Erfassungsperiode länger als oder gleich 20 Sekunden ist.

8. Empfänger nach Anspruch 7, **dadurch gekennzeichnet, dass** die besagte Erfassungsperiode mindestens 30 Sekunden beträgt.

9. Empfänger nach einem der Ansprüche 1 bis 8, **dadurch gekennzeichnet, dass** das besagte Ortungsmodul (ML) dazu eingerichtet ist, gemäß einer Periode, deren Zeitdauer kürzer als die Erfassungsperiode der besagten digitalen Navigationssignale ist, periodisch Ortungspunkte zu ermitteln.

10. Empfänger nach Anspruch 9, **dadurch gekennzeichnet, dass** die besagte Ermittlungsperiode etwa gleich eine Sekunde ist.
